**Europäisches Patentamt**

**European Patent Office**

**Office européen des brevets**

(11) Veröffentlichungsnummer: **0 325 169**
**A1**

## (12) EUROPÄISCHE PATENTANMELDUNG

(21) Anmeldenummer: 89100534.0

(22) Anmeldetag: 13.01.89

(51) Int. Cl.⁴: **B29C 59/04**

(30) Priorität: 16.01.88 DE 3801139

(43) Veröffentlichungstag der Anmeldung:
26.07.89 Patentblatt 89/30

(84) Benannte Vertragsstaaten:
**AT BE CH FR GB LI SE**

(71) Anmelder: **RÖCHLING HAREN KG**
**Bürgermeister-Fischer-Strasse 1**
**D-4472 Haren, Ems 1(DE)**

(72) Erfinder: **Lückering, Anton, Dipl.-Ing.**
**Georg-Wesener-Strasse 34a**
**D-4470 Meppen/Ems(DE)**

(74) Vertreter: **Busse & Busse Patentanwälte**
**Postfach 1226 Grosshandelsring 6**
**D-4500 Osnabrück(DE)**

(54) **Verfahren und Formvorrichtung zur Herstellung von stranggezogenen Profilkörpern.**

(57) Zur Herstellung von stranggezogenen Profilkörpern (4) aus aushärtbarem Kunstharz, in das sich über die Länge der Profilkörper (4) erstreckende Verstärkungsfasern eingebettet sind, wird ein fortlaufender Strang aus Verstärkungsfasern im wesentlichen kontinuierlich durch eine Formvorrichtung mit einem Düsenkanal (2) hindurchgezogen und in diesem der dort mit Kunstharz völlig durchtränkte Faserstrang zu einem in seinem Grundquerschnitt der Grundquerschnittskontur des Düsenkanals (2) entsprechenden Profilskörper (4) geformt sowie ausgehärtet. Dabei wird an den Faserstrang vor dessen Einlauf in den Düsenkanal (2) ein seinerseits fortlaufendes Formhilfsmittel (6) herangeführt, gemeinsam mit dem Faserstrang durch den Düsenkanal (2) hindurchgeführt und anschließlich unter Zurücklassen einer Zusatzprofilierung entfernt. Als Formhilfsmittel wird ein Formband (6) verwendet, das Querprofilbereiche aufweist, und das Formband (6) vor dem Düsenkanal (2) auf den Faserstrang aufgelegt und im Düsenkanal (2) außerhalb seiner Grundquerschnittskontur derart geführt, daß die außerhalb der Querprofilbereiche verlaufende Querkonturlinie seiner Außenfläche Teil der Grundquerschnittskontur des Düsenkanals (2) bildet. Der Düsenkanal (2) weist hierzu zumindest eine an seine Grundquerschnittskontur angrenzende, längsgerichtete, durchgehende Kanalerweiterung (5) auf, und dem Düsenkanal (2) ist zumindest ein endlos umlaufendes Formband (6) mit außenseitigen Querprofilbereichen zugeordnet, das in seinem Grundquerschnitts dem Querschnitt der Kanalerweiterung (5) entspricht und mit seinem Arbeitstrum (7) in der Kanalerweiterung (5) längsgeführt ist.

Verfahren und Formvorrichtung zur Herstellung von stranggezogenen Profilkörpern

Die Erfindung bezieht sich auf ein Verfahren zur Herstellung von stranggezogenen Profilkörpern gemäß dem Oberbegriff des Anspruchs 1 sowie auf eine Formvorrichtung zur Herstellung von stranggezogenen Profilkörpern gemäß dem Oberbegriff des Anspruchs 2.

Durch Strangziehen hergestellte Profilkörper aus faserverstärktem Kunstharz sind im allgemeinen lediglich mit einer längsdurchgehenden Profilierung herstellbar, die durch die Kontur des Düsenquerschnitts des Düsenkanals der Formvorrichtung bestimmt ist. Darüber hinaus ist es bekannt (DE-PS 31 45 153), Verankerungsstäbe mit einer in die Kontur eingelassenen, nicht ausschließlich längslaufenden Nutung herzustellen. Dies geschieht mit Hilfe eines an den Faserstrang vor dessen Einlauf in den Düsenkanal der Formvorrichtung herangeführten, fortlaufenden Formhilfsmittels, das gemeinsam mit dem Faserstrang durch den Düsenkanal hindurchgeführt und anschließend unter Zurücklassen einer Nutvertiefung entfernt werden kann. Mit Hilfe dieses als Formdraht ausgebildeten Formhilfsmittels können neben längslaufenden Nuten innerhalb der Kontur des Verankerungsstabes auch solche wendelförmiger Gestalt gebildet werden.

Der Erfindung liegt die Aufgabe zugrunde, ein Verfahren und eine Vorrichtung zur Herstellung von stranggezogenen Profilkörpern aus aushärtbarem Kunstharz zu schaffen, mit denen auf der Außenseite des Profilkörpers beliebige Zusatzprofilierungen sowohl in Gestalt erhabener Vorsprünge, als auch in Form eingesenkter Vertiefungen einfach angebracht werden können.

Die Erfindung löst diese Aufgabe durch ein Verfahren gemäß Anspruch 1 sowie eine Formvorrichtung gemäß Anspruchs 2. Hinsichtlich wesentlicher weiterer Ausgestaltungen wird auf die Ansprüche 3 bis 14 verwiesen.

Die Erfindung schafft auf besonders einfache und kostengünstige Weise erstmals die Möglichkeit, beliebige Strangprofilkörper mit einer beliebigen Außenprofilierung zu versehen, wie sie für eine Vielzahl von Anwendungszwecken erwünscht sein kann. So können beispielsweise leistenförmige Profilkörper ein- oder beidseitig mit Markierungen wie Ziffern, Buchstaben etc. oder auch mit Ornamenten versehen werden, die das optische Erscheinungsbild verbessern. Statt dessen oder zusätzlich können in dem Strangprofilkörper auch funktionswesentliche Querverformungen angebracht werden, beispielsweise eine Verrippung oder ähnliches. Die Zusatzprofilierung ist dabei außerordentlich präzise ausführbar, ohne daß ein zusätzlicher Arbeitsgang erforderlich ist. Auch sind irgendwelche unerwünschten Kraftrückwirkungen auf dem Profilkörper bei dessen Herstellung vermieden, da von dem Formband erfindungsgemäßer Ausbildung keine Druckwirkungen auf den Profilkörper ausgeübt werden, die über die Druckwirkung einer feststehenden Begrenzungswand hinausgehen.

Weitere Einzelheiten und Vorteile ergeben sich aus der nachfolgenden Beschreibung und der Zeichnung, die mehrere Ausführungsbeispiele einer Formvorrichtung erfindungsgemäßer Ausbildung schematisch veranschaulicht. In der Zeichnung zeigen:

Fig. 1 eine schematische, abgebrochene Seitenansicht einer Formvorrichtung nach der Erfindung,

Fig. 2 eine Ansicht der Stirnseite des den Düsenkanal begrenzenden Düsengehäuses,

Fig. 3 einen abgebrochenen vertikalen Teillängsschnitt durch das Auslaufende des Düsengehäuses,

Fig. 4 einen abgebrochenen Schnitt nach der Linie IV-IV in Fig. 3,

Fig. 5 eine Darstellung ähnlich Fig. 3 zur Veranschaulichung einer zweiten Formbandausführung,

Fig. 6 eine Schnittdarstellung ähnlich Fig. 4 nach der Linie VI-VI in Fig. 5,

Fig. 7 eine Darstellung ähnlich Fig. 5 zur Veranschaulichung einer dritten Formbandausführung,

Fig. 8 eine Darstellung ähnlich Fig. 7 zur Veranschaulichung einer vierten Formbandausführung,

Fig. 9 eine Darstellung ähnlich Fig. 8 zur Veranschaulichung einer fünften Formbandausführung,

Fig. 10 eine Darstellung ähnlich Fig. 9 zur Veranschaulichung einer sechsten Formbandausführung.

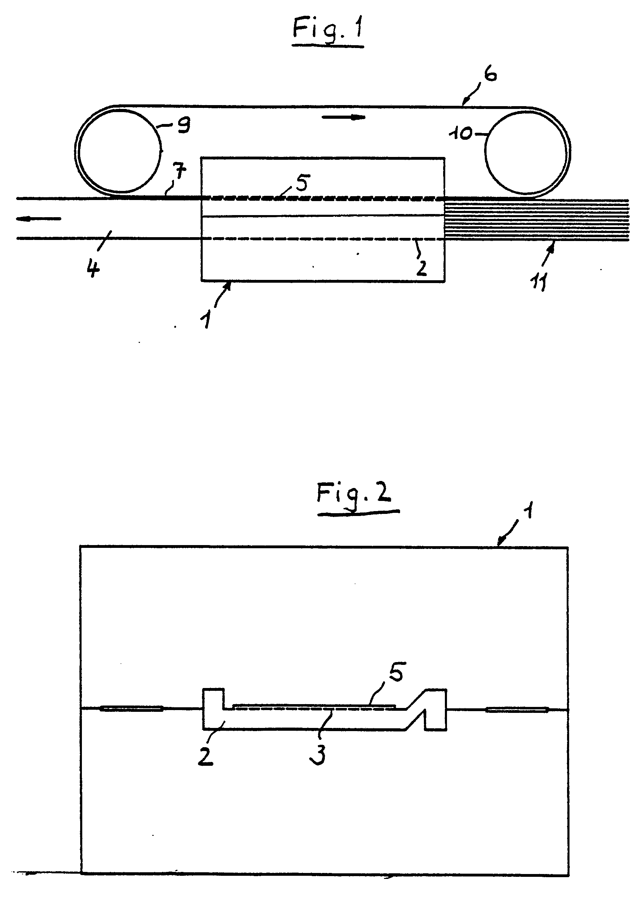

Die in der Zeichnung veranschaulichte Formvorrichtung zur Herstellung von stranggezogenen Profilkörpern aus aushärtbarem Kunstharz, in das sich über die Länge der Profilkörper 4 erstreckende Verstärkungsfasern eingebettet sind, umfaßt im einzelnen ein horizontal geteiltes Düsengehäuse 1, dessen Gehäuseteile gemeinsam einen Düsenkanal 2 umgrenzen, der sich über die Länge des Düsengehäuses 1 erstreckt. Der Düsenkanal 2 hat dabei, wie dies insbesondere der Fig. 2 entnommen werden kann, eine Grundquerschnittskontur, die in Fig. 2 durch die ausgezogenen Linien sowie die gestrichelte Linie 3 definiert wird. Diese Grundquerschnittskontur des Düsenkanals 2 entspricht dabei dem Grund querschnitt eines herzustellenden Profilkörpers 4, wie er als Strangprofil aus dem Auslaßende des Düsengehäuses 1 austritt.

Der Düsenkanal 2 weist bei dem dargestellten Beispiel eine an die Grundquerschnittskontur oberhalb der Konturlinienteils 3 unmittelbar angrenzende, ihrerseits längsgerichtete Kanalerweiterung 5 auf, die bei dem dargestellten Beispiel die Form eines breiten, flachen, geradlinig begrenzten Rechtecks aufweist. Grundsätzlich ist aber auch jede andere wünschenswerte oder geeignete Querschnittsgestalt für die Kanalerweiterung 5 möglich.

Dem Düsengehäuse 1 ist bei dem dargestellten Beispiel ein endlos umlaufendes Formband 6 zugeordnet, das in seinem Grundquerschnitt dem Querschnitt der Kanalerweiterung 5 entspricht und mit seinem Arbeitstrum 7 beim Durchlaufen des Düsenkanals 2 in der Kanalerweiterung 5 längsgeführt ist. Das Formband 6 füllt dabei mit seinem Grundquerschnittsteil die Kanalerweiterung 5 im wesentlichen vollständig aus und bietet eine dem Düsenkanal 2 im Bereich des Arbeitstrums 7 zugewandte Außenfläche mit einer im Bereich des Grundquerschnitts im wesentlichen geraden Querkonturlinie dar. Diese Querkonturlinie entspricht dem Konturlinienteil 3 und fällt im Betrieb mit diesem zusammen.

Das Formband 6 weist dabei außenseitig Querprofilbereiche auf, die entweder über die Außenfläche des Formbandes 6 nach außen vorstehende Vorsprünge oder in die Außenfläche eingesenkte Vertiefungen bilden, wobei das Formband 6 mit Querprofilbereichen beider Arten versehen sein kann.

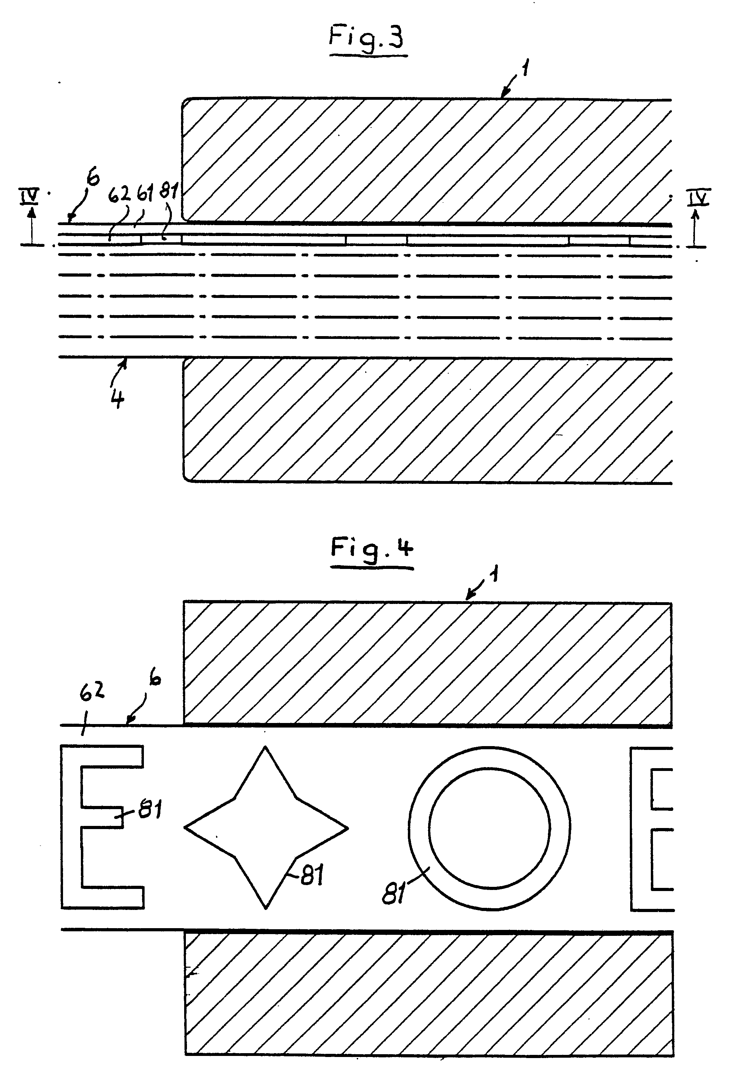

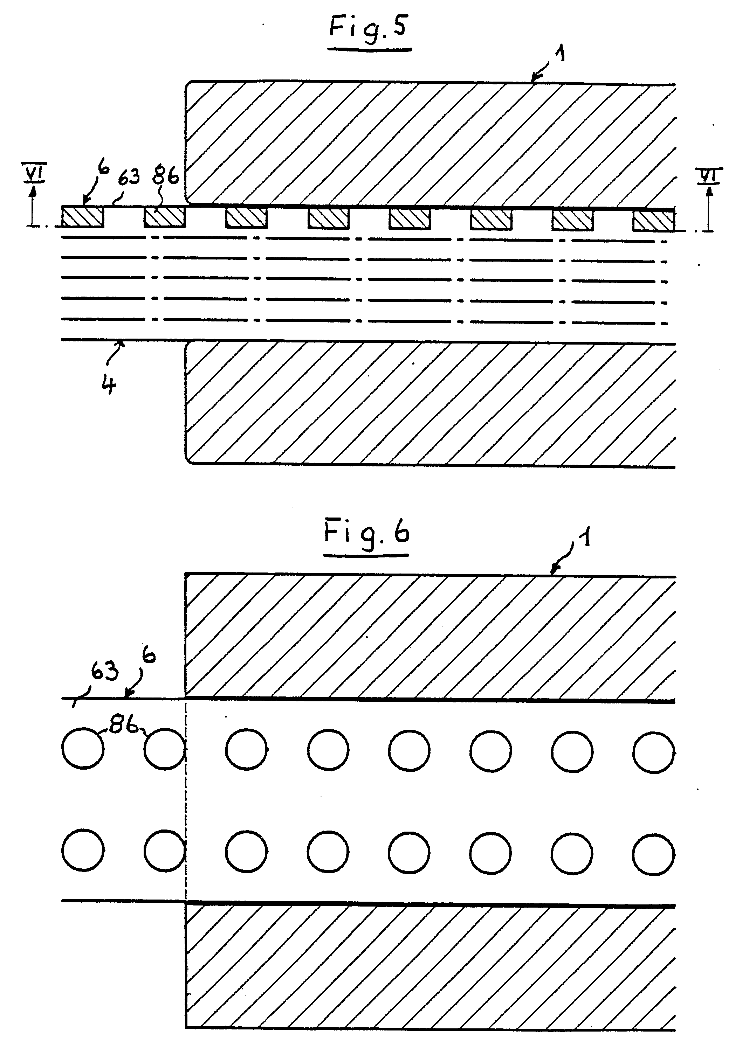

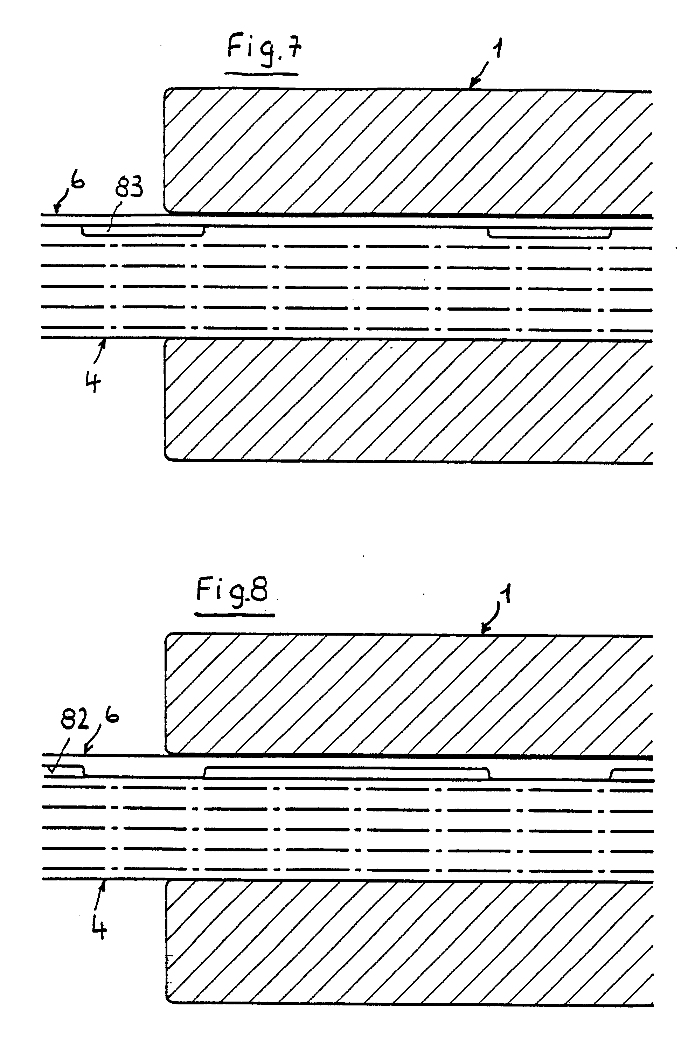

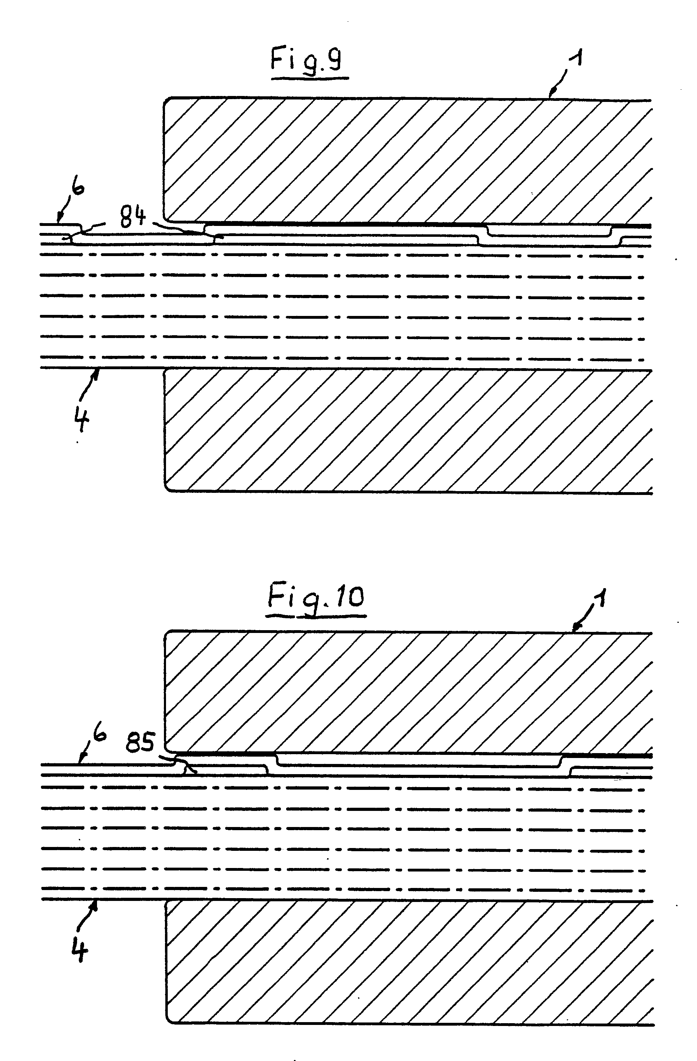

Wie der Fig. 3 und 4 entnommen werden kann, kann das Formband 6 von zwei fluchtend übereinanderliegenden Teilbändern 61,62 gebildet sein, wobei die Querprofilbereiche von Aussparungen 81 im äußeren Bandteil 62 gebildet sind. Diese Aussparungen 81 können, wie das die Fig. 4 erkennen läßt, die unterschiedlichsten Formgestaltungen haben und Buchstaben, Ornamente, Ziffern oder sonstige Markierungen bilden. Das Formband 6 kann aber auch, wie dies die Fig. 5 bis 10 erkennen lassen, als einteiliger Bandkörper mit außenseitigen Querprofilbereichen ausgebildet sein. Die Querprofilbereiche können dabei von sich über die gesamte Dicke des Bandkörpers 6 erstreckenden Aussparungen, z.B. Ausstanzungen, gebildet sein, können jedoch auch als Aussparungen 82 ausgebildet sein, die sich lediglich über einen Teil der Dicke des Bandkörpers 6 erstrecken, wie dies z.B. die Fig. 8 veranschaulicht. Die Fig. 7 veranschaulicht demgegenüber eine Ausführung des Formbandes 6, bei der die Querprofilbereiche von an der Außenseite des Formbandes 6 integral angeformten, erhabenen Vorsprüngen 83 gebildet sind. Statt dessen können, wie dies aus den Fig. 9 und 10 hervorgeht, die Querprofilbereiche auch von Einprägungen 84 bzw. Ausprägungen 85 gebildet sein, die auch nebeneinander im Bandkörper 6 vorgesehen sein können.

Das Formband 6 kann gemäß Fig. 5 auch einen dünnen Trägerbandteil 63 und als Querprofilbereiche außenseitig auf diesem befestigte Profilteile 86 aufweisen.

Das Formband ist bevorzugt endlos ausgebildet und läuft um Umlenkrollen 9,10 um, kann jedoch auch als lediglich einmalig zur Verwendung kommendes Element ausgebildet sein. Das Formband 6 ist bevorzugt biegsam ausgebildet, wobei es aus Metallblech, aus faserverstärktem Kunstharz, aus Gummi oder sonst geeigneten Werkstoffen bestehen kann.

Statt dessen ist es aber auch möglich, das Formband 6 als Kettengliederband auszubilden, dessen gelenkig untereinander verbundenen Kettenglieder Plattenkörper bilden, die im Bereich des Arbeitstrums 7 fugenlos aneinandergrenzen und gemeinsam eine dem Düsenkanal 2 zugewandte geschlossene Begrenzungsfläche mit erhaben vor-stehenden oder vertieft eingesenkten Querprofilbe-reichen bilden. Auch eine solche Ausgestaltung kann endlos ausgeführt sein.

Zur Bildung der Profilkörper 4 wird ein fortlaufender Strang 11 aus Verstärkungsfasern im wesentlichen kontinuierlich durch das Düsengehäuse 1 und dessen Düsenkanal 2 in Fig. 1 von rechts nach links hindurchgezogen, und im Düsenkanal 2 wird der dort mit Kunstharz völlig durchtränkte Faserstrang 11 zu einem in seinem Grundquer-schnitt der Grundquerschnittskontur des Düsenkan-als 2 entsprechenden Profilkörper 4 geformt sowie ausgehärtet. Durch das an den Faserstrang 11 vor dessen Einlauf in den Düsenkanal 1 herangeführte Formband 6, das gemeinsam mit dem Faserstrang 11 den Düsenkanal 2 durchläuft, wird durch die Wirkung der Querprofilbereiche der fortlaufend entstehende Profilkörper 4 außenseitig mit beliebigen Querprofilierungen versehen, wie sie aus optischen und/oder funktionellen Gründen erwünscht sind. Nach Verlassen des Düsenkanals 2 hebt sich das Formband 6 vom Profilkörper 4 ab und läßt die erhabene und/oder eingesenkte Zusatzprofilierung zurück.

## Ansprüche

1. Verfahren zur Herstellung von stranggezogenen Profilkörpern aus aushärtbarem Kunstharz, in das sich über die Länge der Profilkörper erstrek-kende Verstärkungsfasern eingebettet sind, bei dem ein fortlaufender Strang aus Verstärkungsfasern im wesentlichen kontinuierlich durch eine Formvorrichtung mit einem Düsenkanal hindurchgezogen und in diesem der dort mit Kunstharz völlig durchtränkte Faserstrang zu einem in seinem Grundquerschnitt der Grundquerschnittskontur des Düsenkanals entsprechenden Profilkörper geformt sowie ausgehärtet wird, wobei an den Faserstrang vor dessen Einlauf in den Düsenkanal ein seinerseits fortlaufendes Formhilfsmittel herangeführt, gemeinsam mit dem Faserstrang durch den Düsenkanal hindurchgeführt und anschließend unter Zurücklassen einer Zusatzprofilierung entfernt wird, **dadurch gekennzeichnet,** daß als Formhilfsmittel ein Formband verwendet wird, das Querprofilbereiche aufweist, und daß das Formband vor dem Düsenkanal auf den Faserstrang aufgelegt und im Düsenkanal außerhalb seiner Grundquerschnittskontur derart geführt wird, daß die außerhalb der Querprofilbereiche verlaufende Querkonturlinie seiner Außenfläche Teil der Grundquerschnittskontur des Düsenkanals bildet.

2. Formvorrichtung zur Herstellung von stranggezogenen Profilkörpern (4) aus aushärtbarem Kunstharz, in das sich über die Länge der Profilkörper erstreckende Verstärkungsfasern eingebettet sind, mit einem Düsenkanal (2), dessen Grundquerschnittskontur dem Grundquerschnitt des herzustellenden Profilkörpers entspricht, und mit einem durch den Düsenkanal (2) hindurch bewegbaren, fortlaufenden Formhilfsmittel (6), insbesondere zur Durchführung des Verfahrens nach Anspruch 1, **dadurch gekennzeichnet,** daß der Düsenkanal (2) zumindest eine an seine Grundquer-schnittskontur angrenzende, längsgerichtete, durchgehende Kanalerweiterung (5) aufweist, und daß dem Düsenkanal (2) zumindest ein endlos umlaufendes Formband (6) mit außenseitigen Querprofilbereichen zugeordnet ist, das in seinem Grundquerschnitts dem Querschnitt der Kanalerweiterung (5) entspricht und mit seinem Arbeitstrum (7) in der Kanalerweiterung (5) längsgeführt ist.

3. Formvorrichtung nach Anspruch 1, **dadurch gekennzeichnet,** daß die Kanalerweiterung (5) einen im wesentlichen rechteckigen Querschnitt aufweist und das Formband (6)eine Außenfläche mit außerhalb von Querprofilbereichen im wesentlichen gerader Querkonturlinie seiner Innenfläche besitzt.

4. Formvorrichtung nach Anspruch 2 oder 3, **dadurch gekennzeichnet,** daß das Formband (6) aus zwei fluchtend übereinanderliegenden Teilbändern (61,62) besteht und die Querprofilbereiche von Aussparungen im äußeren Bandteil (62) gebildet sind.

5. Vorrichtung nach Anspruch 1 oder 2, **dadurch gekennzeichnet,** daß das Formband (6) als einteiliger Bandkörper mit außenseitigen Querprofilbereichen ausgebildet ist.

6. Formvorrichtung nach Anspruch 5, **dadurch gekennzeichnet,** daß die Querprofilbereiche von sich über die gesamte Dicke des Bandkörpers (6) erstreckenden Aussparungen gebildet sind.

7. Formvorrichtung nach Anspruch 4, **dadurch gekennzeichnet,** daß die Querprofilbereiche von in die Außenfläche eingesenkten, sich lediglich über einen Teil der Dicke des Bandkörpers (6) erstreckenden Aussparungen (82) gebildet sind.

8. Formvorrichtung nach Anspruch 4, **dadurch gekennzeichnet,** daß die Querprofilbereiche von an der Außenseite der Formbandes (6) integral angeformten, erhabenen Vorsprüngen (83) gebildet sind.

9. Formvorrichtung nach Anspruch 4, **dadurch gekennzeichnet,** daß die Querprofilbereiche von Ein- (84) und/oder Ausprägungen (85) im Bandkörper (6) gebildet sind.

10. Formvorrichtung nach Anspruch 4, **dadurch. gekennzeichnet,** daß das Formband (6) einen dünnen Trägerbandteil (63) und als Querprofilbereiche außenseitig auf diesem befestigte Profilteile (86) aufweist.

11. Formvorrichtung nach einem der Ansprüche 2 bis 10, **dadurch gekennzeichnet,** daß das Formband (6) biegsam ist.

12. Formvorrichtung nach Anspruch 11, **dadurch gekennzeichnet,** daß das Formband (6) aus Metallblech besteht.

13. Formvorrichtung nach Anspruch 12, **dadurch gekennzeichnet,** daß das Formblech (6) aus faserverstärktem Kunstharz, Gummi od.dgl. besteht.

14. Formvorrichtung nach einem der Ansprüche 2 bis 9, **dadurch gekennzeichnet,** daß das Formband (6) als Kettengliederband ausgebildet ist, dessen gelenkig untereinander verbundenen Kettenglieder Plattenkörper bilden, die im Bereich des Arbeitstrums (7) fugenlos aneinandergrenzen und gemeinsam eine dem Düsenkanal (2) zugewandte geschlossene Begrenzungsfläche mit erhaben vorstehenden oder vertieft eingesenkten Querprofilbereichen bilden.

Fig.1

Fig.2

## Fig.3

## Fig.4

# Fig.5

# Fig.6

Fig.7

Fig.8

Fig.9

1

6

84

4

Fig.10

1

6    85

4

## Europäisches Patentamt

# EUROPÄISCHER RECHERCHENBERICHT

Nummer der Anmeldung

## EINSCHLÄGIGE DOKUMENTE

EP 89100534.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 3 795 471 (MILANI)<br>* Ansprüche; Fig. 2 * | 1-3,5,11 | B 29 C 59/04 |
| A | | 12,13 | |
| A | US - A - 3 455 765 (MEYER)<br>* Fig. 23 * | 1-3 | |
| A | US - A - 4 025 257 (SAGANE)<br>* Fig. 12,13 * | 1-3 | |
| A | DE - A1 - 3 247 145 (HELD)<br>* Gesamt * | | |

RECHERCHIERTE SACHGEBIETE (Int. Cl.4)

B 29 C

Der vorliegende Recherchenbericht wurde für alle Patentansprüche erstellt.

| Recherchenort | Abschlußdatum der Recherche | Prüfer |
|---|---|---|
| WIEN | 17-04-1989 | REININGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82